Europäisches Patentamt

European Patent Office

Office européen des brevets

(19)

(11) Veröffentlichungsnummer: **0 499 034 A2**

(12) # EUROPÄISCHE PATENTANMELDUNG

(21) Anmeldenummer: **92100552.6**

(51) Int. Cl.5: **F16B 17/00**

(22) Anmeldetag: **15.01.92**

(30) Priorität: **15.02.91 DE 4104650**

(43) Veröffentlichungstag der Anmeldung:
**19.08.92 Patentblatt 92/34**

(84) Benannte Vertragsstaaten:
**AT BE CH DE DK ES FR GB GR IT LI LU NL SE**

(71) Anmelder: **Melitta Haushaltsprodukte GmbH &
Co. Kommanditgesellschaft
Ringstrasse 99
W-4950 Minden 1(DE)**

(72) Erfinder: **Salomon, Thomas Dipl. Ing.
An der Brücke 19
W-4800 Bielefeld 14(DE)**

(74) Vertreter: **Stracke, Alexander, Dipl.-Ing. et al
Jöllenbecker Strasse 164
W-4800 Bielefeld 1(DE)**

(54) **Rastverbindung und Schlüssel zu deren Lösung.**

(57) Bei dieser Rastverbindung sind seitlich neben den die Verrastung bewirkenden Rasthaken (1) zwei weitere Rasthaken (4) angeordnet, die von dem Rasthaken (1) auf seinem Weg zur Rastaufnahme (3) zurückgedrängt werden und die hinter ihm einschnappen, wenn er seinerseits in die Rastaufnahme (3) einschnappt. Die Verrastung wird samt der Verriegelung noch durch ein Gegenlager (5) blockiert.

Fig. 1

EP 0 499 034 A2

Rank Xerox (UK) Business Services

Die vorliegende Erfindung betrifft eine Rastverbindung mit einem elastisch federnden Rasthaken und einem Aufnahmeteil dafür. Sie betrifft ferner einen Schlüssel zur Lösung einer derartigen Rastverbindung. Derartige Rastverbindungen sind in ihrem grundsätzlichen Aufbau vielfach in der Technik in den verschiedensten Anwendungsbereichen bekannt. Sie dienen der schraubenlosen Verbindung mit einander zumindest zeitweilig zu verbindender Teile, insbesondere auch Kunststoffteile. In der Praxis besteht vielfach das Bedürfnis, die getätigte Rastverbindung so zu blockieren, daß sie zumindest von Unkundigen nicht wieder geöffnet werden kann, um so beispielsweise das Öffnen von Gehäusen, Verkapselungen und dergleichen durch Unkundige zu verhindern.

Der vorliegenden Erfindung liegt von daher die Aufgabe zugrunde, eine Rastverbindung zu schaffen, die sich mit Vollzug der Verrastung selbst in einer Weise blockiert, die es dem Unkundigen auch unter erheblicher Kraftanwendung unmöglich macht, die Rastverbindung wieder zu lösen. Die Aufgabe besteht ferner darin, einen Schlüssel für eine derartige Rastverbindung zu schaffen, der es dem befugten Fachmann ermöglicht, im Bedarfsfall die Rastverbindung doch wieder zu lösen.

Die erfindungsgemäße Lösung besteht bezüglich der Rastverbindung darin, daß seitlich neben dem elastischen Rasthaken ein zeitweilig vom Rasthaken zurückdrängbares, elastisches Sperrteil so angeordnet ist, daß es nach Einschnappen des Rasthakens in das Aufnahmeteil hinter den Rasthaken schnappt und daß ferner hinter dem Rasthaken und dem dahinter geschnappten Sperrteil ein Gegenlager in einem Abstand geringer als die Einschnapptiefe des Rasthakens vorgesehen ist.

Dank dieser Ausgestaltung kommt es beim Betätigen der Rastverbindung zu einem Blockieren des in das Aufnahmeteil eingeschnappten Rasthakens, wobei diese Blockade auch unter erheblicher Kraftanwendung von einem Unkundigen nicht wieder zu lösen ist. Das Blockieren geschieht zunächst dadurch, daß der elastische Rasthaken auf seinem Weg in die Aufnahme des Aufnahmeteiles, auf welchem Weg der Rasthaken ja selbst durch die Hakenspitze in zurückgedrängter Stellung liegt, er das seitlich neben ihm liegende elastische Sperrteil selbst nach seitlich außen zurückdrängt. Erreicht der elastische Rasthaken die Aufnahme im Aufnahmeteil, schnappt er in die Aufnahme nach vorne vor, was dem bislang zurückgedrängten seitlichen elastischen Sperrteil die Möglichkeit gibt, seinerseits nun vor und damit hinter den eingerasteten Rasthaken zu schnappen. Da aufgrund der funktionsnotwendigen Elastizität von Rasthaken und auch elastischem Sperrteil bei einer Angriffsmöglichkeit auf den eingerasteten Rasthaken ein Zurückdrücken des Rasthakens auf dem Aufnahmeteil unter gleichzeitigem Rückverbiegen des hintergreifenden Sperrteiles möglich wäre, ist das Gegenlager vorgesehen, das so knapp abständig hinter dem hintergeschnappten Sperrteil liegt, daß der vorstehend geschilderte unerwünschte Rückdrängvorgang nicht vollzogen werden kann, da das hintergeschnappte Sperrteil sich sofort an das Gegenlager anlegt und von diesem blockiert wird. Bei einem ordnungsgemäßen Lösevorgang mit Hilfe eines speziellen Schlüssels wird dagegen das seitliche Sperrteil zunächst hinter dem Rasthaken fortgedrückt, so daß dieser hinten nun wieder zum Gegenlager genug Freiraum hat, um aus dem Aufnahmeteil zurückgedrückt zu werden.

Weitere bevorzugte Ausgestaltungen bezüglich der Rastverbindung sind in den Unteransprüchen gekennzeichnet.

Die erfindungsgemäße Lösung bezüglich des Schlüssels zum Lösen der Rastverbindung besteht in einem Bartteil, das an seinem vorlaufenden Ende mindestens eine seitliche Schräge zum Zurückdrängen des Sperrteiles aufweist, sowie mit einer dazu zurückliegenden, quer dazu über das Bartteil verlaufenden Schräge zum Zurückdrängen des elastischen Rasthakens, der ein Aufnahmeraum für den zurückgedrängten Rasthaken zugeordnet ist. Mit Hilfe eines derartigen Spezialschlüssels ist ein leichtes Lösen der blockierten Rastverbindung möglich. Mit der bzw. den Schrägen am vorlaufenden Bartteilende werden zunächst das bzw. die Sperrteile hinter dem eingerasteten elastischen Rasthaken wieder seitlich nach außen zurückgedrängt, so daß der Rasthaken nicht mehr hintergriffen ist. Mit der dann im Verlauf der Einsteckbewegung des Schlüssels danach zur Wirkung kommenden quer verlaufenden Schräge wird der elastische Rasthaken selbst aus dem Aufnahmeteil rückgedrückt und kann dabei in den Aufnahmeraum eintreten. Der Schlüsselbart kann dabei insgesamt so schmal gehalten werden, daß seine Einsteckbewegung durch das Gegenlager nicht behindert werden kann.

Der Schlüsselbart ist in seiner insgesamt erforderlichen Raumform mit den diversen Schrägen, die eine ganz bestimmte Raumlage und ganz bestimmte Abstände zueinander haben müssen, so kompliziert, daß er nicht ohne weiteres schnell und einfach von einem Unkundigen nachgebildet werden kann.

Weitere Ausgestaltungen des Schlüssels ergeben sich aus weiteren entsprechenden Unteransprüchen.

Ein Ausführungsbeispiel einer Rastverbindung und eines Schlüssels gemäß der Erfindung werden nachstehend unter Bezugnahme auf die beigefügte Zeichnung näher beschrieben. Es zeigen

Figur 1     eine Schnittdarstellung einer Rastverbindung gemäß der Erfindung in

Figur 2 eine Seitenansicht der Rastverbindung nach Figur 1,

Figur 3 eine Draufsicht auf die Rastverbindung nach Figur 1,

Figur 4 die Rastverbindung nach Figur 1 in einer Phase kurz vor der Verrastung,

Figur 5 eine Seitenansicht der Rastverbindung nach Figur 4,

Figur 6 eine Draufsicht auf die Rastverbindung nach Figur 4,

Figur 7 einen Schnitt durch einen Schlüssel gemäß der Erfindung zum Lösen der Rastverbindung,

Figur 8 eine Draufsicht auf den Schlüssel nach Figur 7.

Die Rastverbindung beinhaltet zunächst einen elastisch federnden Rasthaken 1, der beispielsweise in Art der üblichen Federbeine aus Kunststoff ausgebildet sein kann und der sich an einem der durch die Rastverbindung zu verbindenden Teile befindet. Der elastische Rasthaken 1 wirkt mit einem Aufnahmeteil 2 zusammen, das zur Aufnahme des vorspringenden Teiles des Rasthakens eine Aufnahme 3, beispielsweise in Form eines Fensters, einer Aussparung oder dergleichen hat.

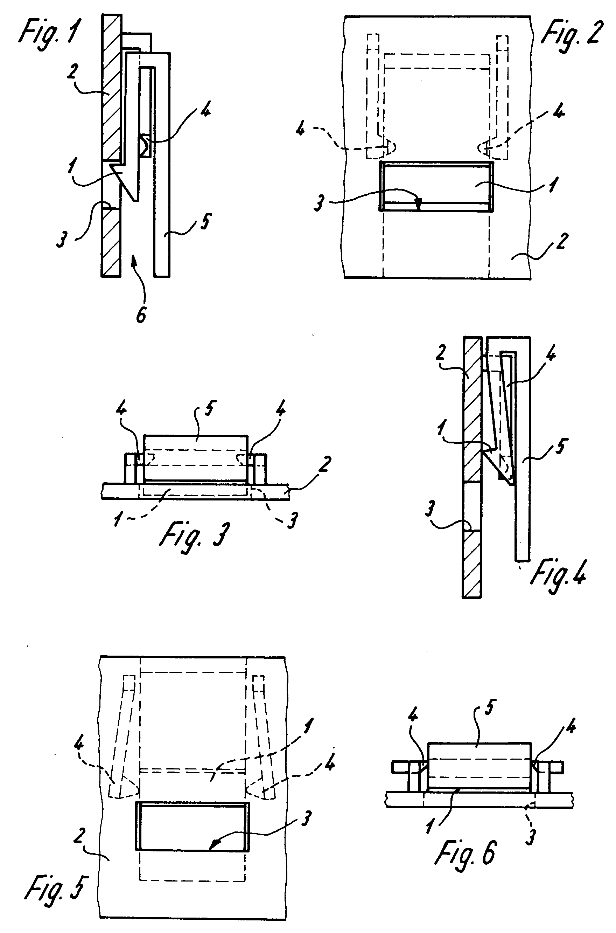

Im Bereich der Rastverbindung sind nun ferner im dargestellten Ausführungsbeispiel zwei elastische Sperrhaken 4 vorgesehen, die wiederum in Art der elastischen Federbeine aus Kunststoff bestehen können und die seitlich neben dem elastischen Rasthaken 1 angeordnet sind, und zwar so nahe, daß sie von dem elastischen Rasthaken 1 selbst, wenn er sich auf dem Weg zur Aufnahme 3 im Aufnahmeteil 2 befindet, seitlich nach außen zurückgedrängt werden. Dabei ist daran zu denken, daß in dieser Phase der elastisch federnde Rasthaken 1 im Verhältnis zu seiner vorderen Einschnappstellung zurückgedrängt liegt, da ja die Spitze seines Rasthakens in dieser Phase noch auf dem Aufnahmeteil 2 läuft, da dessen Aufnahme 3 noch nicht erreicht ist. Die Sperrhaken 4 sind somit so seitlich neben dem Rasthaken angeordnet, daß sie von dem Rasthaken in seiner zurückgedrängten Phase auf dem Weg zur Verrastung nach außen zurückgedrängt werden können. Erreicht nun aber der elastisch federnde Rasthaken 1 die Aufnahme 3 im Aufnahmeteil 2 und schnappt in die Aufnahme 3 ein, verlagert er sich dabei auch in Einschnapprichtung nach vorn und gibt damit dem seitlichen Sperrhaken 4 Gelegenheit, hinter ihm einzuschnappen. Diese Vorgänge sind jeweils aus dem Vergleich der Figuren 1 und 4, 2 und 5 sowie 3 und 6 erkennbar.

Um ein gewaltsames Rückdrängen des eingerasteten Federhakens 1 samt entsprechendem Rückwärtsverbiegen der Sperrhaken 4 zu verhindern, beinhaltet die Rastverbindung noch ein Gegenlager 5 beispielsweise in Form einer starren Wand oder dergleichen. Das Gegenlager 5 ist dabei in einem solchen Abstand zum elastischen Rasthaken 1 und den Sperrhaken 4 angeordnet, daß in der blockierten Verrastungsstellung, wenn also die Sperrhaken 4 hinter dem eingerasteten Rasthaken 1 liegen (Figur 1), der verliebene Abstand zwischen dem Gegenlager 5 und der hinteren Fläche der Sperrhaken 4 kleiner ist als die Einschnapptiefe des Rasthakens 1 im Aufnahmeteil 2, so daß der Rasthaken 1 in dieser Lage keinesfalls aus dem Aufnahmeteil 2 herausgedrückt werden kann.

Sind dagegen die Sperrhaken 4 hinter dem elastischen Rasthaken 1 fort seitlich nach außen rückgedrängt und damit der Rasthaken 1 wieder freigegeben, findet der Rasthaken nunmehr bis zum Gegenlager 5 ausreichend Platz, wenn er ganz aus dem Aufnahmeteil 2 zurückgedrängt wird.

Es ist grundsätzlich möglich, eine derartige Rastverbindung mehrteilig aufzubauen. So kann eine das Gegenlager 5 bildende Wandung durch ein Teil zur Verfügung stehen, das zu dem den Rasthaken 1 tragenden Teil und dem Aufnahmeteil 2 gesondert ist. Es wäre dabei auch denkbar, die Sperrhaken 4 wiederum an einem gesonderten Teil vorzusehen. Es könnte dabei auch daran gedacht werden, die Sperrhaken 4 auf der Rückseite des elastisch federnden Rasthakens 1 in Art einer weiteren Verrastung zeitweilig festzulegen, so daß über die Blockierung der geschilderten Rastverbindung das gesonderte Teil mit den elastischen Sperrhaken verrastet wäre. Es besteht aber auch die Möglichkeit, die Rastverbindung insgesamt nur zweiteilig aufzubauen. In einem solchen Fall sind das Aufnahmeteil 2 und die elastischen Sperrhaken 4 baulich unter Belassung eines Durchtrittes für den elastischen Rasthaken 1 vereinigt. In einem solchen Fall wäre dann ferner der elastische Rasthaken 1 baulich mit dem Gegenlager 5 vereinigt.

Gemäß einer die Lösung der blockierten Rastverbindung mittels eines Spezialschlüssels begünstigenden Ausgestaltung definieren das Aufnahmeteil 2 und das Gegenlager 5 einen Zutrittsraum 6, in den ein solcher Schlüssel geführt und lagedefiniert eingesteckt werden kann.

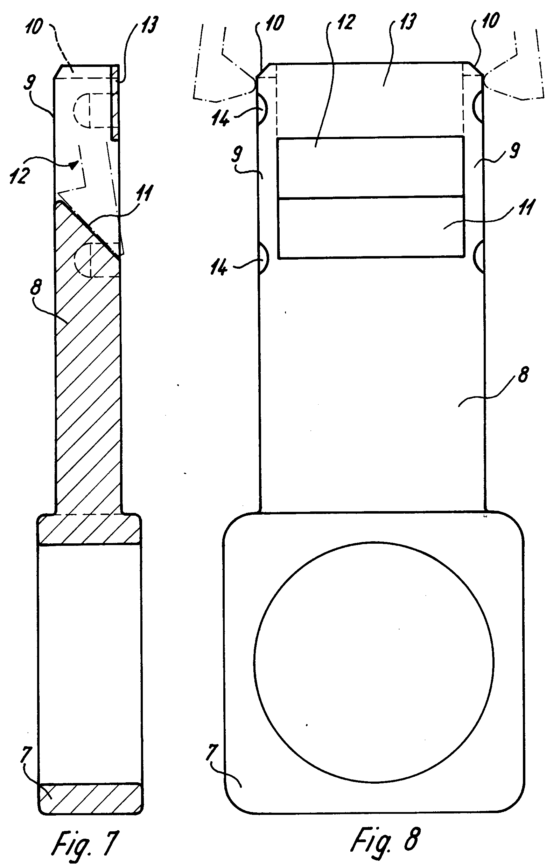

Ein derartiger Schlüssel zum Lösen der blockierten Rastverbindung ist in den Figuren 7 und 8 gezeigt. An einem Griff 7 befindet sich ein Bartteil 8, dessen Dicke so bemessen ist, daß es noch in den Zutrittsraum 6 eingesteckt werden kann. Im dargestellten Ausführungsbeispiel hat das Bartteil 8 an seinem vorlaufenden Ende zwei seitliche, vorstehende Stege 9, an deren vorlaufenden Enden seitlich außen jeweils Schrägen 10 gebildet sind, die dem Zurückdrängen der hinter den elastischen Rasthaken 1 geschnappten Sperrhaken 4 nach seitlich außen dienen. Am Fuß der Stege 9 befindet sich, quer zu den Schrägen 10 und quer über das Bartteil 8 verlaufend, eine sich über die Dicke des Bartteiles 8 erstreckende Schräge 11, die dazu dient, den elastischen Rasthaken 1 aus der Aufnahme 3 des Aufnahmeteiles 2 zurückzudrücken. Der Freiraum zwischen den beiden Stegen 9 bildet dabei einen Aufnahmeraum 12, in den der rückgedrängte elastische Rasthaken aufgenommen werden kann. Zur Stabilisierung des Schlüssels sind die beiden Stege 9 an ihren freien Enden durch eine schmale Querrippe 13 verbunden.

Das Bartteil 8 ist so breit bemessen und die Schrägen 10 haben einen solchen Abstand voneinander und einen solchen Abstand zur quer liegenden Schräge 11, daß in der erforderlichen Weise zunächst von den Schrägen 10 die Sperrhaken 4 hinter den elastischen Rasthaken 1 zurückgedrängt werden, bevor die Schräge 11 den elastischen Rasthaken zurückbringt.

Für die Betätigung des Schlüssels im Sinne der Lösung der Rastverbindung kann es zweckmäßig sein, den seitlich nach außen rückgedrängten Sperrhaken 4 im Schlüssel definierte Lagen zu geben. Zu diesem Zweck sind in den schmalen Außenseiten des Bartteiles 8 abständig zu den Schrägen 10 und abständig zueinander beidseitig die vorspringenden Bereiche der Sperrhaken 4 aufnehmende Aussparungen 14 vorgesehen.

**Patentansprüche**

1. Rastverbindung mit einem elastisch federnden Rasthaken (1) und einem Aufnahmeteil (2, 3) dafür, **dadurch gekennzeichnet,** daß seitlich neben dem elastischen Rasthaken (1) mindestens ein zeitweilig von dem Rasthaken (1) zurückdrängbares, elastisches Sperrteil (4) so angeordnet ist, daß es nach Eindringen des Rasthakens (1) in das Aufnahmeteil (2, 3) hinter den Rasthaken (1) schnappt und daß ferner hinter dem Rasthaken (1) und dem dahinter geschnappten Sperrteil (4) ein Gegenlager (5) in einem Abstand geringer als die Eindringtiefe des Rasthakens (1) in das Aufnahmeteil (2, 3) vorgesehen ist.

2. Rastverbindung nach Anspruch 1, dadurch gekennzeichnet, daß das Aufnahmeteil (2, 3) und das elastische Sperrteil (4) baulich unter Belassung eines Durchtrittes für den Rasthaken (1) vereinigt sind.

3. Rastverbindung nach Anspruch 1 oder 2, dadurch gekennzeichnet, daß der elastische Rasthaken (1) und das Gegenlager (5) baulich vereinigt sind.

4. Rastverbindung nach einem der vorhergehenden Ansprüche, dadurch gekennzeichnet, daß das elastische Sperrteil aus zwei zu den beiden Seiten des Rasthakens (1) angeordneten Sperrhaken (4) besteht.

5. Rastverbindung nach einem der vorhergehenden Ansprüche, dadurch gekennzeichnet, daß das Aufnahmeteil (2, 3) und das Gegenlager (5) einen Zutrittsraum (6) für einen Schlüssel zum Lösen der Rastverbindung definieren.

6. Schlüssel zum Lösen der Rastverbindung nach einem der vorhergehenden Ansprüche, gekennzeichnet durch ein Bartteil (8) mit mindestens einer seitlichen Schräge (10) zum Zurückdrängen des Sperrteiles (4) am vorlaufenden Bartteilende sowie mit einer dazu zurückliegenden, quer dazu über das Bartteil (8) verlaufenden Schräge (11) zum Zurückdrängen des elastischen Rasthakens (1), der ein Aufnahmeraum (12) für den zurückgedrängten Rasthaken (1) zugeordnet ist.

7. Schlüssel nach Anspruch 6, dadurch gekennzeichnet, daß an dem Bartteil (8) zwei seitliche, vorstehende Stege (9) gebildet sind, an deren vorlaufenden Enden seitlich die Schrägen (10) zum Zurückdrängen des Sperrteiles (4) vorgesehen sind.

8. Schlüssel nach Anspruch 7, dadurch gekennzeichnet, daß die sich über die Dicke des Bartteiles (8) erstreckende, am Bartteil (8) quer verlaufende Schräge (11) zum Zurückdrängen des elastischen Rasthakens (1) zwischen den Fußbereichen der Stege (9) angeordnet ist.

9. Schlüssel nach einem der vorhergehenden Ansprüche, dadurch gekennzeichnet, daß die Stege (9) an ihren freien Enden mit einer schmalen Querrippe (13) unter Belassung eines Aufnahmeraumes (12) zwischen den Stegen (9) verbunden sind.

10. Schlüssel nach einem der vorhergehenden Ansprüche, dadurch gekennzeichnet, daß in den Schmalseiten des Bartteiles (8), gegebenenfalls in den Stegen (9), abständig zu den Schrägen (10) ein oder mehrere Aussparungen (14) zur Aufnahme des bzw. der Sperrteile (4) vorgesehen sind.

Fig. 1

Fig. 2

Fig. 3

Fig. 4

Fig. 5

Fig. 6

Fig. 7

Fig. 8